# FASCICULE DE BREVET EUROPEEN

(11) **EP 3 758 830 B1**
(45) Date de publication et mention de la délivrance du brevet: **23.02.2022**
(21) Numéro de dépôt: 19711988.6
(22) Date de dépôt: 25.02.2019
(51) Int. Cl.: B01D 53/047, B01D 53/053

(54) **PROCÉDÉ DE PRODUCTION D'OXYGÈNE PAR VSA O2, MINIMISANT LES OUVERTURES ET FERMETURES DE VANNE**
VERFAHREN ZUR HERSTELLUNG VON SAUERSTOFF ÜBER O2 VSA, MINIMIERUNG VON VENTILÖFFNUNGEN UND -SCHLIESSUNGEN
METHOD FOR PRODUCING OXYGEN VIA O2 VSA, MINIMIZING VALVE OPENINGS AND CLOSINGS

(30) Priorité: 01.03.2018 FR 1851795
(43) Date de publication de la demande: 06.01.2021
(73) Titulaire: L'AIR LIQUIDE, SOCIETE ANONYME POUR L'ETUDE ET L'EXPLOITATION DES PROCEDES GEORGES CLAUDE, 75007 Paris (FR)
(72) Inventeur: RODRIGUES, Guillaume, 94503 Champigny-sur-Marne (FR); DARRIGADE, François, 75007 PARIS (FR); LE BOT, Patrick, 94300 VINCENNES (FR); PETIT, Pierre, 75007 PARIS (FR); PUSIOL, Stéphane, 75007 PARIS (FR); PEREZ, Maxime, 02810 Bussiares (FR)
(74) Mandataire: Air Liquide
(86) Numéro de dépôt international: PCT/FR2019/050424
(87) Numéro de publication internationale: WO 2019/166725

(56) Documents cités:
- EP-A1- 0 458 350
- FR-A1- 2 766 384
- FR-A1- 2 772 637
- FR-A1- 2 783 723
- FR-A1- 2 975 017

## Description

La présente invention est relative à un procédé de production d'oxygène à partir d'un flux d'air par adsorption à variation de vide (VSA = Vacuum Swing Adsorption).

Les unités VSA (Vacuum Swing Adsorption) O2 sont des unités de séparation des gaz de l'air par procédé d'adsorption à modulation de pression dans lequel l'adsorption s'effectue sensiblement à la pression atmosphérique, dite pression haute, c'est-à-dire entre 1 bara et 1,5 bar, et la désorption s'effectue à une pression inférieure à la pression atmosphérique, typiquement entre 0,3 à 0,5 bar. La production d'oxygène gazeux atteint une pureté de l'ordre de 90% à 93% et la gamme de production de ce type d'appareils varie de 30t/j à 150t/j. Ces procédés trouvent des applications dans les domaines tels que la purification d'eau, la fabrication de verres, le traitement des pâtes à papier, etc.

Un procédé VSA de production d'oxygène de l'art antérieur est divulgué dans FR 2 772 637 A1.

Un compresseur (ou une soufflante) et une pompe à vide sont souvent utilisés pour atteindre les pressions du cycle.

Les cycles de VSA comprennent au moins les étapes suivantes : production, décompression, purge, recompression. Les unités VSA utilisent des zéolites sélectives qui permettent d'obtenir un produit d'une pureté typiquement autour de 90% ou plus.

Les unités fonctionnent généralement avec un temps de cycle total supérieur à 30 secondes et emploient un à trois adsorbeurs.

Cette durée de temps de cycle est subdivisée en un nombre de sous-étapes généralement supérieur à 8 afin d'obtenir à la fois une bonne productivité et une basse énergie spécifique. En conséquence, les vannes, généralement de type papillon, de ces unités sont contraintes à de nombreuses ouvertures fermetures (plusieurs millions par an), imposant des intervalles de maintenance d'autant plus courts et un coût d'exploitation d'autant plus élevé que leur nombre de cycles est important. Par ailleurs, le nombre de cycle peut induire un dérèglement de ces vannes, dégradant les performances de l'unité, ou de manière plus critique peut conduire à une défaillance de ces vannes impliquant une vaporisation de liquide pour assurer la continuité d'approvisionnement des clients avec un surcoût sensible.

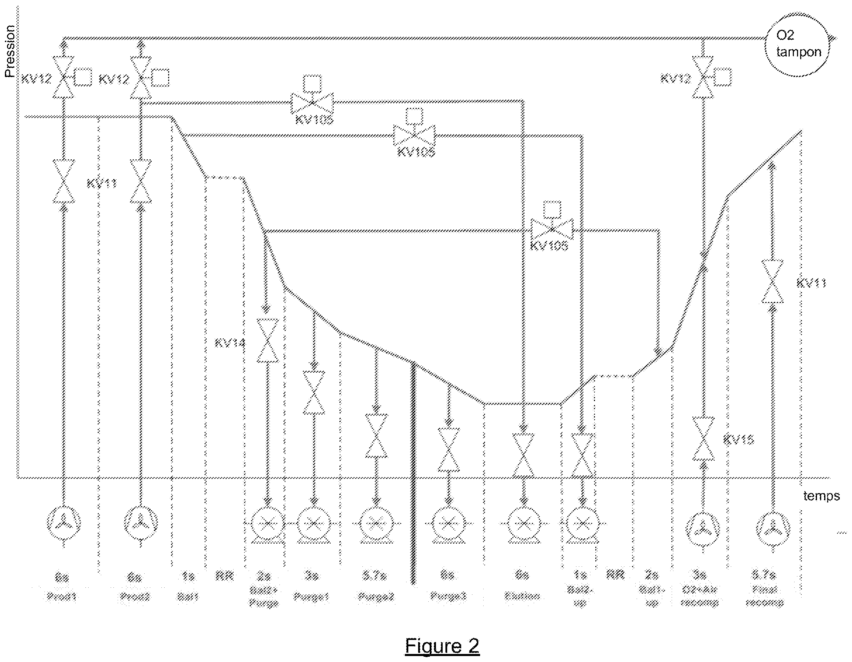

La figure 2 représente un cycle à 2 adsorbeurs, 1 capacité de tampon de production, une soufflante, une pompe à vide et comportant 14 sous-étapes.

Chaque adsorbeur comporte 2 côtés, le premier étant le côté alimentation ou pompage et le second étant le côté production d'oxygène.

Simultanément aux étapes 1 à 7 subies par l'adsorbeur 1, l'adsorbeur 2 subit les étapes 8 à 14 Etape 1 (Production 1): La soufflante alimente le premier adsorbeur en air, l'azote est sélectivement adsorbé et un flux riche en oxygène est envoyé à la capacité de production Etape 2 (Production 2): La soufflante alimente le premier adsorbeur en air, l'azote est sélectivement adsorbé et un flux riche en oxygène est envoyé à la capacité de production. Une partie du débit d'oxygène produit est prélevée directement en sortie du premier adsorbeur et est utilisée dans une étape ultérieure (étape 9)

Etape3 (Equilibrage 1) : la soufflante n'alimente plus le premier adsorbeur. Celui-ci est donc clos du côté alimentation et la sortie est connectée au deuxième adsorbeur de telle sorte qu'une partie du gaz contenu dans l'adsorbeur sous phase non-adsorbée, riche en oxygène, soit réutilisée pour regonfler et éluer le deuxième adsorbeur (étape 10)

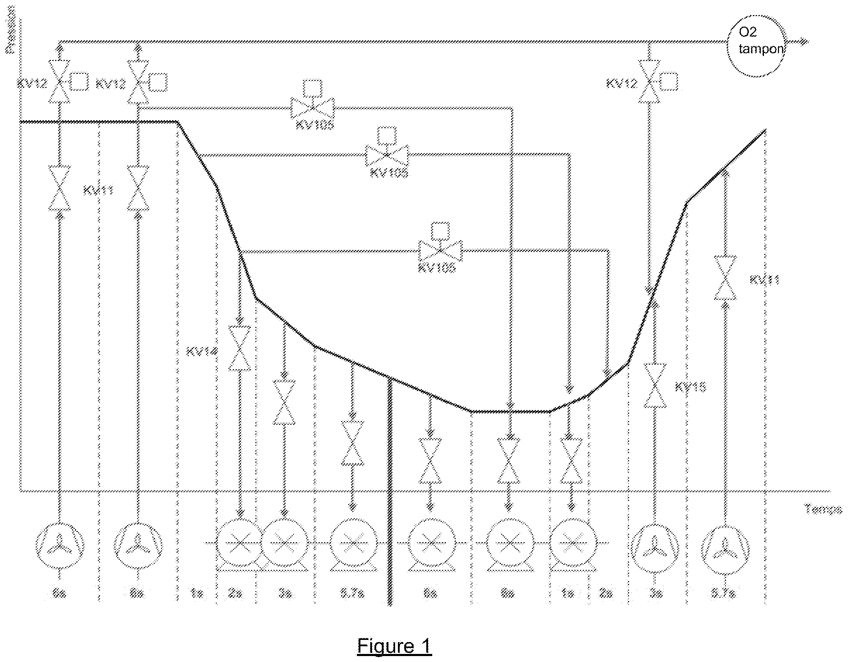

Etape 4 (Reduced Run) : le premier et le deuxième adsorbeurs sont clos et les machines fonctionnent avec un différentiel de pression minimal. Cette étape a une durée nulle lorsque l'unité fonctionne à son débit nominal (figure 1).

Etape 5 (Equilibrage 2 + purge) : le premier adsorbeur est connecté à la pompe à vide du côté alimentation, ce qui permet de désorber une partie de l'azote contenu dans l'adsorbant, et sa sortie est connectée au deuxième adsorbeur de telle sorte qu'une partie du gaz contenu dans l'adsorbeur sous phase non-adsorbée soit réutilisée pour regonfler la bouteille 2 (étape 12) Etape 6 (Purge 1) : le premier adsorbeur est clos côté du côté production d'oxygène et le côté alimentation est connecté à la pompe à vide qui extrait alors l'azote contenu dans l'adsorbant. Etape 7 (Purge 2) : le premier adsorbeur est clos côté du côté production d'oxygène et le côté alimentation est connecté à la pompe à vide qui extrait alors l'azote contenu dans l'adsorbant. Etape 8 (Purge 3) : le deuxième adsorbeur est clos côté du côté production d'oxygène et le côté alimentation est connecté à la pompe à vide qui extrait alors l'azote contenu dans l'adsorbant. Etape 9 (Elution) : le deuxième adsorbeur est alimenté du côté oxygène par le gaz prélevé en sortie du premier adsorbeur pendant l'étape 2, ce qui permet de repousser le front d'azote adsorbé. Côté alimentation la pompe à vide extrait l'azote contenu dans l'adsorbant.

Etape 10 (Equilibrage 2 haut + purge) : le deuxième adsorbeur est alimenté du côté oxygène par le gaz prélevé en sortie du premier adsorbeur pendant l'étape 3, ce qui permet à la fois de récupérer de l'oxygène qui sinon serait perdu et de repousser le front d'azote, alors que le côté alimentation est connecté à la pompe à vide qui vide extrait l'azote contenu dans l'adsorbant. Etape 11 (Reduced Run) : les 2 adsorbeurs sont clos et les machines fonctionnent avec un différentiel de pression minimal. Cette étape a une durée nulle lorsque l'unité fonctionne à son débit nominal.

Etape 12 (Equilibrage 1 haut) : le deuxième adsorbeur est clos côté alimentation. Il regonfle par le côté oxygène grâce au gaz contenu dans le premier adsorbeur, et provenant de l'étape 5, ce qui permet à la fois de récupérer de l'oxygène qui sinon serait perdu et de repousser le front d'azote.

Etape 13 (O2 + air recompression) : la soufflante est utilisée pour regonfler le deuxième adsorbeur par le côté alimentation et en même temps de l'oxygène est prélevé dans le réservoir tampon de production afin de regonfler l'adsorbeur par le haut, ce qui permet de repousser le front d'azote.

Etape 14 (Recompression finale) : la soufflante est utilisée pour regonfler le deuxième adsorbeur par le côté alimentation. L'adsorbeur est clos côté oxygène.

Nous notons que la vanne d'équilibrage KV105 reste ouverte, à des taux d'ouverture pouvant être variables, durant 3 sous-étapes consécutives.

Lorsque le besoin en O2 du client baisse, il est nécessaire d'ajuster la production.

Le premier niveau d'ajustement consiste à réduire l'ouverture de la vanne de production ce qui a pour conséquence d'augmenter la pureté de l'oxygène. Le rendement de l'unité se trouve alors dégradé. Par ailleurs, au-delà d'un certain niveau de pureté, celle-ci peut brutalement se dégrader en raison du phénomène d'enrichissement d'argon. Pour ces 2 raisons, cette solution est limitée à des réductions modérées du débit de production.

En alternative, s'il est possible de réduire la quantité de gaz d'alimentation et de purge, la production peut être ajustée en jouant sur la durée du cycle. Sur un VSA O2 ce type de fonctionnement est par exemple rendu possible par l'installation de variateurs de vitesse sur les machines d'alimentation et de pompage.

Néanmoins, dans la majorité des cas, pour des raisons de coût, les VSA O2 ne sont pas équipés de systèmes d'ajustement des capacités machines. En conséquence le débit produit par cycle est fixé et il est nécessaire de réduire le nombre de cycles par unité de temps afin de réduire la production. Ceci est réalisé en isolant les adsorbeurs à un moment bien défini du cycle (généralement au moment où la pompe à vide passe d'un adsorbeur à l'autre), et en faisant tourner compresseur et pompe à vide avec un différentiel de pression minimal (par exemple injectant le gaz refoulé par les machines à leur aspiration) afin de minimiser leur consommation d'énergie. Cette étape de pause dans le cycle est appelée temps mort et est associée à l'activation du mode « marche réduite » (Reduced Run RR).

Celui-ci ne s'enclenche pas immédiatement lorsque la demande en oxygène est réduite mais au-delà d'un certain pourcentage de baisse permettant ainsi d'avoir une durée du temps mort compatible avec les temps d'ouverture/fermeture des vannes.

De manière classique, le mode RR est activé en fin de sous-étape 3 minimisant au maximum les manœuvres des vannes d'air et de vide. Par contre, il est nécessaire de fermer la vanne d'équilibrage à la fin de cette sous-étape 3 puis de la ré-ouvrir en fin de temps mort (étape RR).

La figure 2 représente un cycle classique de VSA O2 dans lequel le mode RR (temps mort) est activé en fin de sous-étape 3. Il est nécessaire de fermer la vanne d'équilibrage KV105 en fin de sous-étape 3 puis de la ré-ouvrir en fin de temps mort.

Partant de là, un problème qui se pose est de fournir un procédé amélioré de production d'oxygène par VSA O2, minimisant les ouvertures et fermetures de vanne.

Une solution de la présente invention est un procédé de production d'oxygène à partir d'air par adsorption à variation de vide (VSA) au moyen d'une unité comportant au moins deux adsorbeurs suivant chacun en décalage un cycle de pression comprenant les étapes de production, décompression, purge et recompression, avec l'étape de décompression comprenant au moins une première sous-étape de décompression à co-courant pour équilibrage partiel de pression avec l'autre adsorbeur en recompression à contre-courant par l'intermédiaire d'une vanne d'équilibrage et au moins pour un cycle sur trois une sous-étape de temps mort qui succède à la première sous-étape de décompression, avec :
- pour les cycles ne présentant pas de sous-étape de temps-mort, une pression en fin de première sous-étape de décompression de X bar,
- pour les cycles présentant une sous-étape de temps-mort, une pression en fin de sous-étape de temps mort de X bar et une ouverture de vanne d'équilibrage identique pendant la première sous-étape de décompression et la sous-étape de temps mort.

Par temps mort, on entend une durée où les deux adsorbeurs sont clos. Afin de minimiser la consommation des autres machines de l'installation pendant cette durée, celles-ci sont généralement en recyclage (l'aspiration et le refoulement des machines sont mis en communication) ou rejette l'air aspiré à l'atmosphère.

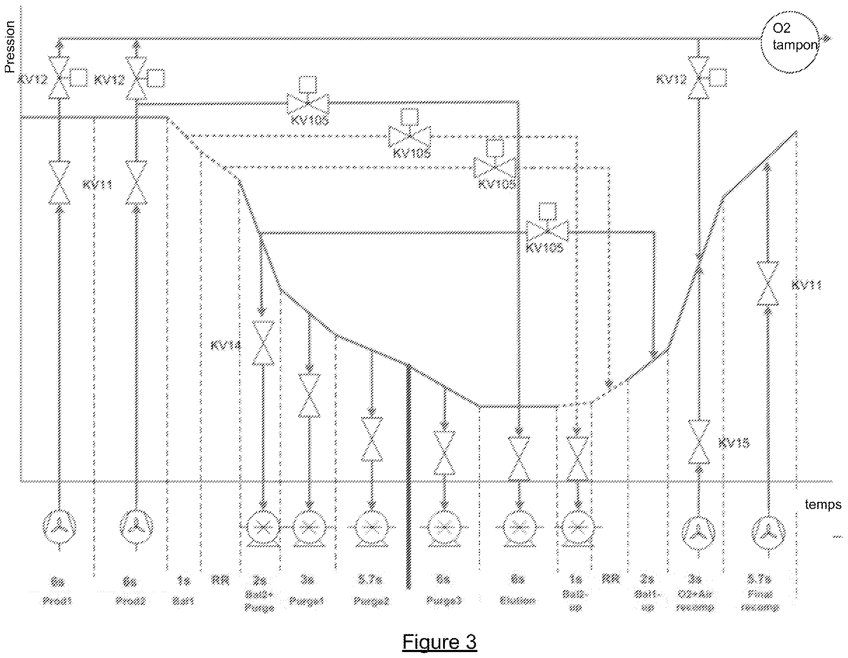

La figure 3 représente un cycle VSA O2 selon l'invention.

L'ouverture de la vanne d'équilibrage est réduite lorsque le mode RR (sous-étape de temps mort) est activé de telle sorte que la pression finale en fin de temps mort soit la même que celle de la fin de la sous-étape 3 en mode d'opération normal c'est à dire dans le cas d'un cycle avec vanne d'équilibrage fermée pendant la sous-étape de temps mort (cf. figure 2). En conséquence, la vanne d'équilibrage ne se referme pas entre les sous-étapes d'équilibrage fiabilisant ainsi l'unité et limitant les pertes de performances ou difficultés de réglage du cycle liées aux temps d'ouverture de vannes de durées comparables à celui des étapes. Bien entendu, la mise en œuvre de cette solution nécessite une stratégie de contrôle de l'ouverture de la vanne d'équilibrage adaptée, c'est-à-dire asservir l'ouverture de la vanne d'équilibrage au débit de production de l'unité.

En miroir de ce qui se déroule lors des étapes 3 et 4, la pression en fin de l'étape de temps mort 11 lorsque le mode RR est activé sera la même que celle en fin d'étape 10 pour les cycles ne présentant pas d'étape de temps mort.

L'activation du mode RR implique l'ajout du temps mort à chaque cycle et pour des raisons de durée minimale du temps mort, l'activation du mode RR ne se fait donc que pour une réduction suffisante de la production d'O2 (avant cela le débit de production induit simplement une augmentation de la pureté O2). Afin de déclencher le mode RR pour des réductions de débit de production plus faibles, l'ajout du temps mort est effectué non pas tous les cycles mais 1 cycle tous les N cycles (N=1 à 5). La mise en place de cette solution, couplée à l'idée présentée précédemment réduit significativement les inconvénients liés au mode RR.

Selon le cas, le procédé selon l'invention peut présenter une ou plusieurs des caractéristiques ci-dessous :
- pendant les cycles ne présentant pas de sous-étape de temps-mort la vitesse de décompression est comprise entre 300-100 mbar/s.
- pendant les cycles présentant une sous-étape de temps mort la vitesse décompression est comprise entre 150 et 5 mbar/s .
- l'étape de décompression comprend au moins pour un cycle sur deux une sous-étape de temps mort.
- les deux adsorbeurs suivent le cycle de pression avec un décalage d'un demi-temps de cycle.
- la vanne d'équilibrage mise en œuvre pendant la première sous-étape de décompression et la sous-étape de temps mort est une vanne de type papillon ou de type globe ;
- l'ouverture de la vanne d'équilibrage est réglée en fonction du débit de production d'oxygène souhaité, donc de la durée du temps mort qui en découle.

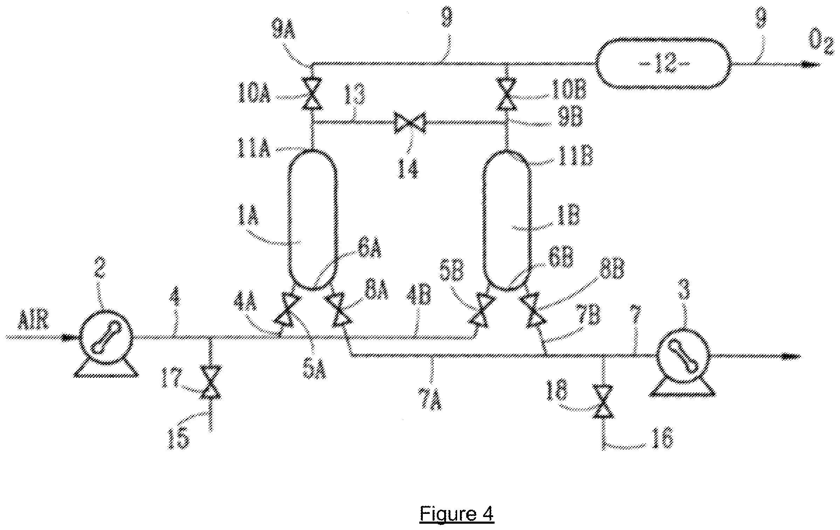

La Figure 4 représente schématiquement une installation V(P)SA à laquelle est appliquée l'invention.

Dans l'exemple représenté, l'installation comprend essentiellement deux adsorbeurs 1A et 1B, un compresseur ou une soufflante 2, une pompe à vide 3 et un ensemble de conduites et de vannes, ainsi que des moyens de commande et de régulation non représentés, adaptés pour mettre en œuvre le cycle décrit plus loin. Le compresseur et la pompe sont des machines volumétriques du type "Roots", et tournent en permanence à vitesse constante.

On a schématisé sur la Figure 4 :
- une conduite 4 d'alimentation en air atmosphérique, qui part du refoulement du compresseur 2 et qui se divise en deux branches 4A, 4B munies de vannes d'alimentation respectives 5A, 5B et reliées respectivement à l'entrée inférieure 6A, 6B des adsorbeurs;
- une conduite 7 de purge/élution qui se divise en deux branches 7A, 7B munies de vannes de purge/élution 8A, 8B et partant respectivement des entrées 6A, 6B des adsorbeurs;
- une conduite 9 de production qui se divise en deux branches 9A, 9B munies de vannes de production 10A, 10B et partant respectivement des sorties supérieures 11A, 11B des adsorbeurs. Une capacité-tampon 12 est montée dans la conduite 9; et
- une conduite 13 d'équilibrage/élution qui relie directement entre elles les sorties 11A et 11B et qui est munie d'une vanne d'équilibrage/élution 14.

L'aspiration du compresseur 2 et le refoulement de la pompe à vide 3 sont en communication permanente avec l'atmosphère environnante. Les adsorbeurs 1A à 1B contiennent chacun au moins un lit d'un adsorbant adapté pour adsorber sélectivement l'azote de l'air, qui est dans cet exemple un tamis moléculaire de type CaA ou une zéolite échangée au lithium. De plus, des contournements 15 et 16, munis d'une vanne respective 17, 18, sont respectivement piqués sur les conduites 4 et 7, juste en aval du compresseur 2 et juste en amont de la pompe 3. Ces contournements, notamment utilisés tous les deux lors de l'étape de temps mort correspondant au mode Reduced Run (marche réduite), débouchent dans l'atmosphère environnante.

L'invention consiste à limiter des ouvertures/fermetures de la vanne d'équilibrage lorsque le mode Reduced Run (temps mort) d'un VSA O2 est actif. Au-delà d'un certain pourcentage de baisse de production, le nombre de cycle par unité de temps est réduit via une étape dite de temps mort où les machines sont en mode recyclage et par conséquent déconnectées des adsorbeurs. Sur certains cycles, l'activation de ce temps mort impose une ouverture/fermeture de la vanne d'équilibrage dans un temps pouvant être très court, induisant une fatigue de cette vanne et une difficulté à maîtriser les performances du procédé. La solution selon l'invention permet donc d'améliorer la fiabilité des unités ou d'en réduire la fréquence et le coût de la maintenance, en évitant de fermer complètement puis d'ouvrir cette vanne.

## Revendications

1. Procédé de production d'oxygène à partir d'air par adsorption à variation de vide (VSA) au moyen d'une unité comportant au moins deux adsorbeurs suivant chacun en décalage un cycle de pression comprenant les étapes de production, décompression, purge et recompression, avec l'étape de décompression comprenant au moins une première sous-étape de décompression à co-courant pour équilibrage partiel de pression avec l'autre adsorbeur en recompression à contre-courant par l'intermédiaire d'une vanne d'équilibrage et au moins pour un cycle sur trois une sous-étape de temps mort qui succède à la première sous-étape de décompression, avec :
- pour les cycles ne présentant pas de sous-étape de temps-mort, une pression en fin de première sous-étape de décompression de X bar,
- pour les cycles présentant une sous-étape de temps-mort, une pression en fin de sous-étape de temps mort de X bar et une ouverture de vanne d'équilibrage identique pendant la première sous-étape de décompression et la sous-étape de temps mort.

2. Procédé selon la revendication 1, **caractérisé en ce que** pendant les cycles ne présentant pas de sous-étape de temps-mort la vitesse de décompression est comprise entre 300-100 mbar/s.

3. Procédé selon l'une des revendications 1 ou 2, **caractérisé en ce que** pendant les cycles présentant une sous-étape de temps mort la vitesse décompression est comprise entre 150 et 5 mbar/s .

4. Procédé selon l'une des revendications 1 à 3, **caractérisé en ce que** l'étape de décompression comprend au moins pour un cycle sur deux une sous-étape de temps mort.

5. Procédé selon l'une des revendications 1 à 4, **caractérisé en ce que** les deux adsorbeurs suivent le cycle de pression avec un décalage d'un demi-temps de cycle.

6. Procédé selon l'une des revendications 1 à 5, **caractérisé en ce que** la vanne d'équilibrage mise en œuvre pendant la première sous-étape de décompression et la sous-étape de temps mort est une vanne de type papillon ou de type globe.

7. Procédé selon l'une des revendications 1 à 6, **caractérisé en ce que** l'ouverture de la vanne d'équilibrage est réglée en fonction du débit de production d'oxygène souhaité.

## Patentansprüche

1. Verfahren zur Erzeugung von Sauerstoff aus Luft durch Druckwechseladsorption (DWA) mittels einer Einheit, die mindestens zwei Adsorber beinhaltet, die jeweils versetzt einem Druckzyklus folgen, umfassend die Schritte Erzeugung, Druckabsenkung, Spülung und Druckaufbau, wobei der Druckabsenkungsschritt mindestens einen ersten Druckabsenkungsteilschritt im Gleichstrom zum teilweisen Druckausgleich mit dem anderen im Druckaufbau im Gegenstrom befindlichen Adsorber über ein Ausgleichsventil und mindestens bei jedem dritten Zyklus einen Totzeitteilschritt, der auf den ersten Druckabsenkungsteilschritt folgt, umfasst, mit:
- bei den Zyklen, die keinen Totzeitteilschritt aufweisen, einem Druck am Ende des ersten Druckabsenkungsteilschritts von X bar,
- bei den Zyklen, die einen Totzeitteilschritt aufweisen, einem Druck am Ende des Totzeitteilschritts von X bar und einer identischen Ausgleichsventilöffnung während des ersten Druckabsenkungsteilschritts und des Totzeitteilschritts.

2. Verfahren nach Anspruch 1, **dadurch gekennzeichnet, dass** während der Zyklen, die keinen Totzeitteilschritt aufweisen, die Druckabsenkungsgeschwindigkeit zwischen 300-100 mbar/s beträgt.

3. Verfahren nach einem der Ansprüche 1 oder 2, **dadurch gekennzeichnet, dass** während der Zyklen, die einen Totzeitteilschritt aufweisen, die Druckabsenkungsgeschwindigkeit zwischen 150 und 5 mbar/s beträgt.

4. Verfahren nach einem der Ansprüche 1 bis 3, **dadurch gekennzeichnet, dass** der Druckabsenkungsschritt mindestens bei jedem zweiten Zyklus einen Totzeitteilschritt umfasst.

5. Verfahren nach einem der Ansprüche 1 bis 4, **dadurch gekennzeichnet, dass** die beiden Adsorber dem Druckzyklus mit einem Versatz um eine halbe Zykluszeit folgen.

6. Verfahren nach einem der Ansprüche 1 bis 5, **dadurch gekennzeichnet, dass** das Ausgleichsventil, das während des ersten Druckabsenkungsteilschritts und des Totzeitteilschritts eingesetzt wird, eine Absperrklappe oder ein Durchgangsventil ist.

7. Verfahren nach einem der Ansprüche 1 bis 6, **dadurch gekennzeichnet, dass** die Öffnung des Ausgleichsventils in Abhängigkeit vom gewünschten Sauerstofferzeugungsvolumenstrom geregelt wird.

## Claims

1. Method for producing oxygen from air using vacuum swing adsorption (VSA) by means of a unit comprising at least two adsorbers each following, with an offset, a pressure cycle comprising the steps of production, decompression, purge and recompression, with the decompression step comprising at least a co-current first decompression substep for the partial balancing of pressure with the other adsorber which is performing countercurrent recompression by means of a balancing valve and, at least for one cycle out of three, a dead time substep which succeeds the first decompression substep, with:
- for the cycles that do not have a dead time substep, a pressure of X bar at the end of the first decompression substep,
- for the cycles that do have a dead time substep, a pressure of X bar at the end of the dead time substep and identical opening of the balancing valve during the first decompression substep and the dead time substep.

2. Method according to Claim 1, **characterized in that** during the cycles that do not have a dead time substep, the decompression rate is comprised between 300-100 mbar/s.

3. Method according to one of Claims 1 and 2, **characterized in that** during the cycles that do have a dead time substep, the decompression rate is comprised between 150 and 5 mbar/s.

4. Method according to one of Claims 1 to 3, **characterized in that** the decompression step comprises a dead time substep for at least one cycle in two.

5. Method according to one of Claims 1 to 4, **characterized in that** the two adsorbers follow the pressure cycle with an offset of half a cycle time.

6. Method according to one of Claims 1 to 5, **characterized in that** the balancing valve used during the first decompression substep and the dead time substep is a valve of the butterfly valve or globe valve type.

7. Method according to one of Claims 1 to 6, **characterized in that** the opening of the balancing valve is regulated according to the desired oxygen production output.
